(19) Europäisches Patentamt
European Patent Office
Office européen des brevets

(11) **EP 2 562 149 B1**

(12) **FASCICULE DE BREVET EUROPEEN**

(45) Date de publication et mention de la délivrance du brevet:
**02.06.2021 Bulletin 2021/22**

(51) Int Cl.:
*C04B 7/52* *(2006.01)*      *C04B 28/02* *(2006.01)*
*C04B 40/00* *(2006.01)*      *C04B 28/04* *(2006.01)*
*C04B 28/14* *(2006.01)*

(21) Numéro de dépôt: **12186918.4**

(22) Date de dépôt: **24.09.2008**

(54) **Béton à faible teneur en clinker**

Beton mit geringem klinkeranteil

Concrete with low clinker content

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.09.2007 FR 0706703**

(43) Date de publication de la demande:
**27.02.2013 Bulletin 2013/09**

(62) Numéro(s) de document de la (des) demande(s) initiale(s) en application de l'article 76 CBE:
**08858492.5 / 2 195 279**

(73) Titulaire: **Holcim Technology Ltd**
**6300 Zug (CH)**

(72) Inventeurs:
• **GARCIA, Emmanuel**
**38110 SAINT-DIDIER-DE-LA-TOUR (FR)**
• **SCHWARTZENTRUBER, Arnaud**
**69740 GENAS (FR)**

(74) Mandataire: **Regimbeau**
**20, rue de Chazelles**
**75847 Paris Cedex 17 (FR)**

(56) Documents cités:
EP-A- 0 789 006      EP-A- 1 702 899
WO-A-93/21122      WO-A-2004/041746
WO-A-2005/110945      WO-A-2007/132098
JP-A- 10 245 555      JP-A- 2002 265 241
US-A- 5 478 391

• CHIKAMATSU, R. ET AL: "High-flowability concrete composition", CHEMICAL ABSTRACTS, AMERICAN CHEMICAL SOCIETY, US, vol. 118, no. 12, 22 mars 1993 (1993-03-22), page 438, XP000353843, ISSN: 0009-2258

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE DE L'INVENTION

L'invention concerne une composition de béton humide à faible teneur en clinker, ainsi que des procédés de préparation d'une telle composition de béton.

ARRIERE-PLAN TECHNIQUE

Dans le domaine des bétons structurels usuels, notamment des bétons de type C25/30 (c'est-à-dire dont la résistance caractéristique à la compression 28 jours après le gâchage, mesurée sur cylindre de 16x32 cm, est d'au moins 25 MPa, selon la norme EN 206-1), on constate que la quantité de ciment est typiquement de 260 à 360 kg par m$^3$ de béton. Les normes européennes actuelles ne prévoient d'ailleurs pas de taux de ciment inférieurs à 260 kg/m$^3$ pour les bétons structurels courants.

Or les procédés de fabrication du ciment, et plus particulièrement de son constituant primordial, le clinker, sont à l'origine de fortes émissions de dioxyde de carbone. La production de grains de clinker suppose en effet :

a) le préchauffage et la décarbonatation de la farine crue qui est obtenue par broyage des matières premières, que sont notamment le calcaire et l'argile ; et

b) la cuisson ou clinkérisation de la farine à une température de 1450-1550°C, suivie par un brusque refroidissement.

Ces deux étapes sont productrices de $CO_2$, d'une part en tant que produit direct de la décarbonatation et d'autre part en tant que produit secondaire de la combustion qui est mise en œuvre à l'étape de cuisson pour fournir l'élévation en température.

Le taux d'émission atteint environ 560 kg de $CO_2$ par tonne de liant, pour un liant utilisé classiquement pour la fabrication d'un béton C25/30, qui contient 65% de clinker (sur une base de 850 kg de $CO_2$ émis en moyenne par tonne de clinker), et il est encore supérieur pour un béton à ultra-haute performance.

Or les fortes émissions de dioxyde de carbone dans les procédés classiques de production de compositions cimentaires et de béton constituent un problème environnemental majeur, et, dans le contexte actuel, sont amenées à être fortement pénalisées sur le plan économique.

Il existe donc un fort besoin d'un procédé permettant de produire du béton avec des émissions associées de dioxyde de carbone réduites, ledit béton présentant des propriétés mécaniques satisfaisantes et en particulier équivalentes à celles des bétons d'usage courant existants, en vue de son utilisation dans l'industrie de la construction. En particulier, on souhaite que la résistance caractéristique à la compression du béton soit supérieure ou égale à 25 MPa à 28 jours, conformément à la norme EN 206-1. D'autre part, on souhaite en particulier que la résistance moyenne à la compression du béton soit supérieure ou égale à 4 MPa, de préférence supérieure ou égale à 5 MPa, à 20°C 16h après le gâchage, la mesure étant réalisée selon la norme EN 12390-3 sur éprouvettes cylindriques, conservées selon la norme EN 12390-2 à 20°C ±2°C et humidité relative supérieure à 95%. On souhaite également que les propriétés rhéologiques du béton humide soient satisfaisantes, c'est-à-dire notamment que la viscosité du mélange gâché soit suffisamment faible pour permettre une manipulation aisée, même 2 heures après le gâchage.

Le document JPH10256666 décrit une composition de ciment, pour solidifier des déchets organiques, comprenant 20% à 40% en poids d'un ciment Portland ayant une surface spécifique variant de 3000 à 5500 cm$^2$/g, 40% à 60% en poids d'un laitier de haut fourneau ayant une surface spécifique variant de 4000 à 10 000 cm$^2$/g, 10% à 30% en poids de plâtre ayant une surface spécifique variant de 3000 à 7000 cm$^2$/g.

RESUME DE L'INVENTION

L'invention a donc pour objet une composition de béton humide telle que définie à l'une quelconque des revendications 1 à 5 comprenant un pré-mélange liant sec comprenant, en proportions massiques :

- du clinker Portland sous forme de grains présentant un Dv97 allant de 10 à 30 μm,
  la quantité minimale dudit clinker en pourcentage massique étant déterminée selon la formule (I) pour un clinker présentant un Dv97 allant de 10 à 30 μm, ou selon la formule (II) pour un clinker présentant une surface spécifique Blaine supérieure ou égale à 5300 cm$^2$/g :

$$\left[26 \text{ x } \ln(Dv97_k)\right] - 43$$

Formule (I)

dans laquelle $Dv97_k$ est le DV97 du clinker exprimé en $\mu$m ;
la quantité totale de clinker dans le pré-mélange liant étant strictement inférieure à 60 %

- du laitier de haut fourneau selon la norme EN 197-1 paragraphe 5.2.2 présentant un taux de verre de 80% au minimum broyé à une finesse minimale $SSB_L$ de 2500 cm²/g, dont la quantité minimale en pourcentage massique est déterminée selon la formule (III):

$$\left[1000 \div SSB_L\right] \text{ x } \left[\left(-90 \text{ x } \ln(Dv97_k)\right) + 310\right]$$

Formule (III)

dans laquelle

$Dv97_k$ est le $Dv97$ du clinker exprimé en $\mu$m,
$SSB_L$ est la surface spécifique Blaine du laitier exprimée en cm²/g ;

- des matériaux complémentaires présentant un Dv90 inférieur ou égal à 200 $\mu$m choisis parmi les poudres calcaires ou les cendres volantes ;
- du sulfate de calcium ;
- 0,05 à 1,5% en masse d'un agent fluidifiant.

Dans toutes les formules (I) et (III), « ln » signifie logarithme népérien.
Selon un mode de réalisation, le pré-mélange liant sec comprend de 0,1 à 0,8 %, en masse, d'un agent fluidifiant, de préférence de type polycarboxylate.
Selon un mode de réalisation du pré-mélange liant sec, le clinker est sous forme de grains présentant un Dv97 allant de 10 à 20 $\mu$m.
Selon un mode de réalisation, les matériaux complémentaires constituent une charge inerte.
Selon un mode de réalisation, le pré-mélange liant sec comprend en outre un accélérateur et / ou un agent entraîneur d'air et / ou un agent viscosant et / ou un retardateur et / ou un inertant des argiles et / ou un fluidifiant.
Est décrit également un mélange liant sec comprenant, en proportions volumiques :

- au moins 10 % du pré-mélange liant sec susmentionné ; et
- jusqu'à 90 % de granulats.

Les granulats comprennent du sable et des gravillons, le rapport massique de la quantité de sable sur la quantité de gravillons étant compris entre 1,5:1 et 1:1,8, de préférence entre 1,25:1 et 1:1,4, plus particulièrement entre 1,2:1 et 1:1,2.
L'invention a pour objet une composition de béton humide, comprenant de 140 à 220 l/m³ d'eau efficace en association avec :

- au moins 10% en volume du pré-mélange liant sec susmentionné; et
- jusqu'à 90 % en volume de granulats ;

les pourcentages correspondant à des proportions par rapport au volume total sec.
Les granulats comprennent du sable et des gravillons, le rapport massique de la quantité de sable sur la quantité de gravillons étant compris entre 1,5:1 et 1:1,8, de préférence entre 1,25:1 et 1:1,4, plus particulièrement entre 1,2:1 et 1:1,2.
Selon un mode de réalisation de la composition de béton humide selon l'invention, la quantité d'eau efficace utilisée varie de 140 à 200 l/m³, de préférence de 150 à 180 l/m³ (voir EN 206-1 paragraphe 3.1.30).
Selon un mode de réalisation, la composition de béton humide selon l'invention est un béton à seuil.
Selon un mode de réalisation, la composition de béton humide selon l'invention présente une résistance moyenne à la compression supérieure à 4 MPa, à 20°C 16 heures après le gâchage, et une résistance caractéristique à la compression supérieure à 25 MPa, 28 jours après le gâchage.

Selon un mode de réalisation, la composition de béton humide selon l'invention présente un étalement compris entre 180 et 270 mm, de préférence entre 215 et 235 mm, à partir du cône de la norme ASTM C230, à l'issue d'une durée de 1 minute et 45 secondes, dont 30 secondes en présence de vibrations de 50 Hz de fréquence et de 0,5 mm d'amplitude.

Selon un mode de réalisation de la composition de béton humide selon l'invention, l'affaissement au cône d'Abrams (ou valeur de slump) est compris entre 0 et 250 mm, de préférence entre 100 et 240 mm.

L'invention a également pour objet un objet en béton durci de la composition susmentionnée.

L'invention a également pour objet un procédé de préparation d'une composition de béton humide tel que défini à la revendication 7 comprenant une étape de :

- gâchage du pré-mélange avec des granulats et de 140 à 220 l/m$^3$ d'eau efficace.

Est également décrit un procédé de préparation d'une composition de béton humide comprenant une étape de gâchage de :

- clinker Portland sous forme de grains présentant un Dv97 allant de 10 à 30 $\mu$m ou présentant une surface spécifique Blaine supérieure ou égale à 5300 cm$^2$/g, de préférence supérieure ou égale à 5500 cm$^2$/g,
la quantité minimale dudit clinker en kg/m$^3$ étant déterminée selon la formule (V) pour un clinker présentant un Dv97 allant de 10 à 30 $\mu$m, ou selon la formule (VI) pour un clinker présentant une surface spécifique Blaine supérieure ou égale à 5300 cm$^2$/g :

$$\left[\left(90 \times \ln(Dv97_k)\right) - 150\right] \times \left(E_{eff} \div 140\right)$$

Formule (V)

dans laquelle

$Dv97_k$ est le Dv97 du clinker exprimé en $\mu$m,
$E_{eff}$ est la quantité d'eau efficace en l/m$^3$

$$\left[\left(-0{,}021 \times SSB_k\right) + 263\right] \times \left(E_{eff} \div 140\right)$$

Formule (VI)

dans laquelle

$SSB_k$ est la surface spécifique Blaine du clinker exprimée en cm$^2$/g,
$E_{eff}$ est la quantité d'eau efficace en l/m$^3$ ;

- laitier, dont la quantité minimale en kg/m$^3$ est déterminée selon la formule (VII) dans le cas d'un mélange avec un clinker présentant un Dv97 allant de 10 à 30 $\mu$m, ou selon la formule (VIII) dans le cas d'un mélange avec un clinker présentant une surface spécifique Blaine supérieure ou égale à 5300 cm$^2$/g :

$$\left(3500 \div SSB_L\right) \times \left[-90 \times \ln(Dv97_k) + 310\right] \times \left(E_{eff} \div 140\right)$$

Formule (VII)

dans laquelle

$Dv97_k$ est le Dv97 du clinker et est exprimé en $\mu$m,
$SSB_L$ est la surface spécifique Blaine du laitier exprimée en cm$^2$/g,
$E_{eff}$ est la quantité d'eau efficace en l/m$^3$ ;

$$(3500 \div SSB_L) \times \left[0{,}021 \times SSB_k - 103\right] \times (E_{eff} \div 140)$$

Formule (VIII)

dans laquelle

$SSB_k$ et $SSB_L$ sont respectivement la surface spécifique Blaine du clinker et du laitier exprimées en $cm^2/g$, $E_{eff}$ est la quantité d'eau efficace en $l/m^3$ ;

- sulfate de calcium ;
- matériaux complémentaires, présentant un Dv90 inférieur ou égal à 200 $\mu m$, dont la quantité minimale en $kg/m^3$ est déterminée selon la formule (IX) suivante :

$$220 - (\text{quantité de laitier}) - (\text{quantité de clinker}) - (\text{quantité de sulfate de calcium})$$

Formule (IX) ;

- de 1500 à 2200 $kg/m^3$, de préférence de 1700 à 2000 $kg/m^3$ de granulats ;
- un agent fluidifiant ;
- éventuellement un accélérateur et / ou un agent entraîneur d'air et / ou un agent viscosant et / ou un retardateur et / ou un inertant des argiles ; avec
- de 140 à 220 $l/m^3$ d'eau efficace,

la quantité totale de clinker dans le béton humide étant inférieure ou égale à 200 kg/m3.

Dans toutes les formules (V) et (VII), « ln » signifie logarithme népérien.

Selon un mode de réalisation du procédé de préparation d'une composition de béton humide, le clinker et / ou le laitier et / ou les matériaux complémentaires sont tels que définis ci-dessus en relation avec le pré-mélange.

Selon un mode de réalisation du procédé de préparation d'une composition de béton humide, la quantité d'eau efficace utilisée varie de 140 à 200 $l/m^3$, de préférence de 150 à 180 $l/m^3$.

Est également décrit un procédé de préparation d'un béton humide coulé, comprenant une étape de :

- coulage d'une composition de béton humide telle que définie ci-dessus.

Est également décrit un procédé de fabrication d'un objet en béton, comprenant une étape de :

- durcissement d'une composition de béton humide telle que définie ci-dessus ou d'une composition de béton humide coulée telle que définie ci-dessus.

L'invention permet de répondre au besoin de réduction des émissions de $CO_2$ jusqu'ici insatisfait par les bétons connus. En effet la quantité de ciment (et en particulier de clinker) utilisée dans le cadre de la présente invention est inférieure à celle qui est traditionnellement nécessaire. Plus précisément, l'émission de $CO_2$ induite est réduite de l'ordre de 50 à 60% par rapport à un béton classique de type C25/30, tout en n'entraînant pas d'amoindrissement sensible des performances mécaniques du béton, puisque l'invention fournit un béton présentant une résistance caractéristique à la compression supérieure ou égale à 25 MPa 28 jours après le gâchage et un temps de décoffrage de l'ordre de 16 heures à 20°C. Par ailleurs, la rhéologie des compositions de béton humide demeure du même ordre que celle des compositions de béton classiques. En outre, l'invention permet, malgré un taux de clinker très faible, de conserver des résistances au jeune âge du même ordre de grandeur que celles obtenues avec une formulation ayant un taux classique de clinker.

Le béton obtenu selon l'invention présente également les avantages suivants :

- le coût des pré-mélanges liants secs peut être typiquement inférieur de 7 à 10 % au coût des pré-mélanges liants secs utilisés pour préparer un béton C25/30 classique.

Les différents buts et avantages et modes de réalisations particuliers de l'invention peuvent être obtenus grâce à une optimisation poussée de l'ensemble des paramètres de formulation, et notamment grâce à :

- une optimisation de l'empilement des grains des différents matériaux (permettant de minimiser la quantité d'eau pour un comportement rhéologique donné) ;
- l'optimisation de la topologie du mélange, c'est-à-dire la multiplication et l'homogénéité dans l'espace des interfaces d'adhésion entre particules de sable et / ou granulats par des « points de colle » d'hydrates de ciment (notamment *via* l'utilisation de grains de clinker environ 2 à 5 fois plus fins que ceux du ciment Portland ordinaire) ;
- la recherche d'une « chrono-formulation », c'est à dire l'utilisation d'une quantité minimale de clinker pour garantir l'acquisition de la résistance mécanique à court terme, tandis que d'autres matériaux liants sont présents en une quantité ajustée pour fournir l'acquisition de la résistance mécanique à plus long terme (prenant en quelque sorte le relais du clinker dans l'accroissement de la résistance mécanique) ;
- l'ajustement de la demande en eau totale par un choix de matériaux à relativement faible demande en eau totale (notamment faible porosité), ce qui permet aussi de maximiser la résistance à la compression ;
- l'optimisation des différents adjuvants et notamment de l'agent fluidifiant (superplastifiant), qui permet de maximiser la réduction en eau efficace par

l'optimisation de la dispersion de la poudre et donc de l'empilement.

BREVE DESCRIPTION DES FIGURES

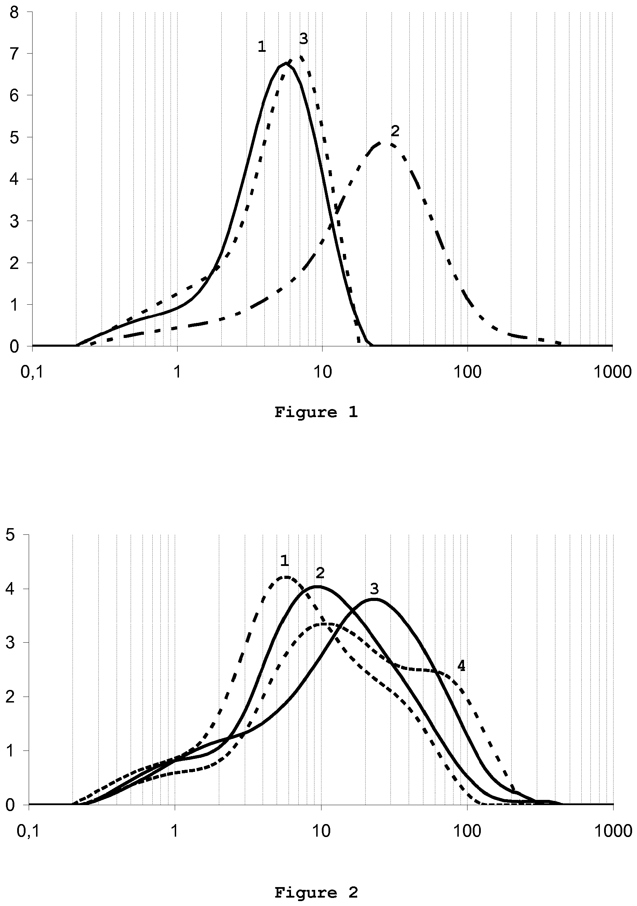

La **Figure 1** représente le profil granulométrique du ciment utilisé dans les exemples ci-dessous. La taille en $\mu$m est représentée en abscisse et le pourcentage volumique est représenté en ordonnée. La courbe n°1 correspond au ciment « SPLC dv97=16$\mu$m sélecté », la courbe n°2 correspond au ciment CEM I 52,5 HTS Le Teil et la courbe n°3 correspond au ciment « SPLC dv97=15$\mu$m micronisé » (voir exemple 4).

**La Figure 2** représente le profil granulométrique des fillers calcaires utilisés dans les exemples ci-dessous. La taille en $\mu$m est représentée en abscisse et le pourcentage volumique est représenté en ordonnée. La courbe n°1 représente le filler BL200, la courbe n°2 représente le filler Calgar FV, la courbe n°3 représente le filler Mikhart 15 et la courbe n°4 représente le filler Calgar 40 (voir exemple 4).

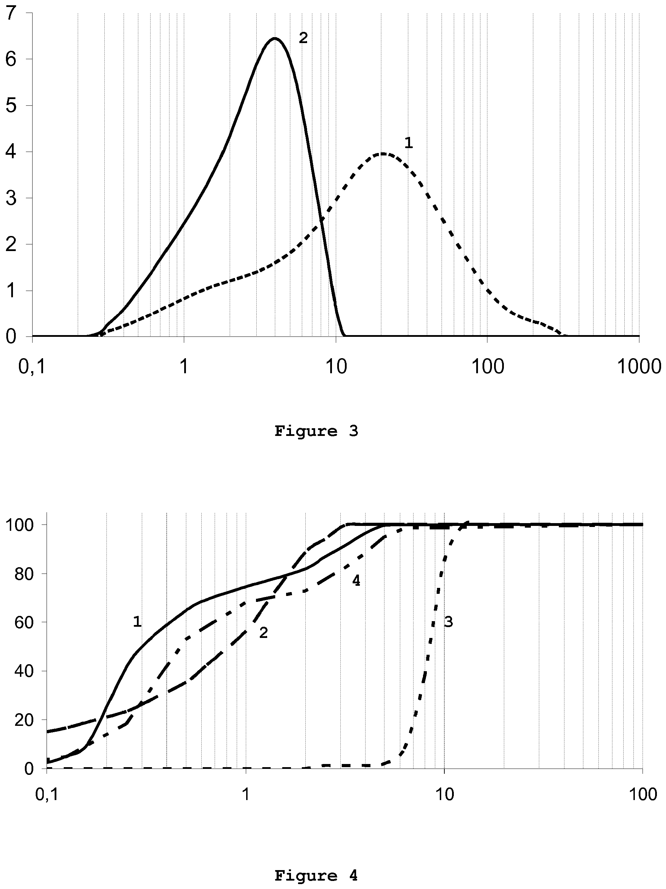

La **Figure 3** représente le profil granulométrique des laitiers utilisés dans les exemples ci-dessous. La taille en $\mu$m est représentée en abscisse et le pourcentage volumique est représenté en ordonnée. La courbe n°1 représente le laitier de Fos/Mer broyé industriellement à une surface Blaine de 3260 cm$^2$/g. La courbe n°2 représente ce même laitier micronisé à une surface Blaine de 9150 cm$^2$/g (voir exemple 4).

La **Figure 4** représente le profil granulométrique des granulats utilisés dans les exemples ci-dessous. La taille en mm est représentée en abscisse et le pourcentage volumique cumulé est représenté en ordonnée. La courbe n°1 représente le sable de Honfleur 0/4R (sable roulé alluvionnaire), la courbe n°2 représente le sable 0/3,15 de Cassis (sable concassé), la courbe n°3 représente le granulat 6,3/10 de Cassis (gravillons concassés), la courbe n°4 représente le granulat 0/5R de St Bonnet (voir exemple 4).

DESCRIPTION DE MODES DE REALISATION DE L'INVENTION

L'invention est maintenant décrite plus en détail et de façon non limitative dans la description qui suit.

Clinker

Par « clinker » on entend selon la présente invention un clinker Portland tel que défini dans la norme EN 197-1 paragraphe 5.2.1.

Le clinker Portland selon l'invention pourra être obtenu à partir des ciments Portland classiques, et en particulier parmi les ciments décrits dans la norme européenne EN 197-1.

Un tel ciment doit être broyé et/ou coupé (par classification pneumatique) afin de fournir du clinker présentant les caractéristiques requises dans l'invention, à savoir un Dv97 allant de 10 à 30 $\mu$m, de préférence allant de 10 à 20 $\mu$m. Est également décrit un ciment présentant une surface spécifique Blaine supérieure ou égale à 5300 cm$^2$/g, de préférence supérieure ou égale à 5500 cm$^2$/g selon la norme EN 196-6 paragraphe 4.

Selon l'invention, le clinker présente un Dv97 allant de 10 à 30 $\mu$m.

Est également décrit, une clinker présentant une surface spécifique Blaine supérieure ou égale à 5300 cm$^2$/g, de préférence supérieure ou égale à 5500 cm$^2$/g.

Le clinker selon l'invention peut être qualifié de clinker ultrafin. Le ciment peut par exemple être broyé à l'aide d'un atelier de broyage comprenant un broyeur primaire de type meule ou vertical couplé à un broyeur finisseur de type Horomill©, pendulaire ou broyeur à boulets, ou broyeur à jets d'air. On peut également utiliser un sélecteur ou classificateur pneumatique de seconde, troisième génération ou bien de très haute efficacité.

On souhaite, en réduisant la taille du clinker, maximiser les distances de diffusion des grains de ciment de façon à maximiser l'homogénéité de la matrice à travers une répartition optimale des points de colle inter-particulaires.

Le Dv97 (en volume) correspond au 97ème centile de la distribution de taille des particules, c'est-à-dire que 97 % des particules ont une taille inférieure au Dv97 et 3 % ont une taille supérieure au Dv97. De même, le Dv90 correspond au 90ème centile de la distribution de taille des particules, c'est-à-dire que 90 % des particules ont une taille inférieure au Dv90 et 10 % ont une taille supérieure au Dv90.

De manière générale, le Dv90, le Dv97 et les autres grandeurs du même type qui sont caractéristiques du profil granulométrique (distribution volumétrique) d'un ensemble de particules ou grains peuvent être déterminés par granulométrie laser pour les particules de taille inférieure à 200 $\mu$m, ou par tamisage pour les particules de taille supérieure à 200 $\mu$m.

Néanmoins, lorsque les particules individuelles ont une tendance à l'agrégation, il convient de déterminer leur taille par microscopie électronique, étant donné que la taille apparente mesurée par granulométrie par diffraction laser est alors plus importante que la taille particulaire réelle, ce qui est susceptible de fausser l'interprétation (agglomération et floculation).

Il peut être préférable d'utiliser un ciment à haute teneur en alcalins solubles. Ceci permet par exemple d'activer la composante laitier.

### Laitier

Par le terme « Laitier » on entend selon la présente invention un laitier de haut fourneau selon la norme EN 197-1 paragraphe 5.2.2 présentant un taux de verre de 80% au minimum, broyé à une finesse minimale (surface spécifique Blaine, méthode normalisée EN 196-6) de 2500 cm$^2$/g.

Les laitiers selon l'invention peuvent être utilisés seuls ou en combinaison les uns avec les autres. L'homme du métier choisira des laitiers appropriés en fonction de leur réactivité, c'est-à-dire de leur aptitude à promouvoir la résistance à la compression entre 1 jour et 28 jours après le gâchage. Cette aptitude varie selon le type et la provenance particulière des laitiers utilisés.

### Matériaux complémentaires

Par « matériaux complémentaires » on entend des matériaux sous forme de grains présentant un Dv90 inférieur ou égal à 200 $\mu$m, et de préférence un Dv97 inférieur ou égal à 200 $\mu$m.

Ces matériaux peuvent servir de matériaux de remplissage de la matrice, c'est-à-dire qu'ils comblent les interstices entre les autres matériaux dont les grains ont des tailles supérieures.

Bien que l'on puisse envisager que les matériaux complémentaires soient des matériaux liants, l'optimisation (notamment en terme de coût) des bétons selon l'invention conduit à préférer que les matériaux complémentaires soient une charge inerte, c'est-à-dire soient des matériaux non-liants (sans activité hydraulique ou pouzzolanique).

On pourra par exemple utiliser comme matériaux complémentaires des poudres calcaires (fillers calcaires) ou des cendres volantes. Sont également décrits des schistes calcinés, des métakaolins, des fillers siliceux, des poudres de silice, des pouzzolanes (voir la norme EN197-1 paragraphe 5.2.3), des laitiers, ou encore du clinker différent du clinker selon l'invention.

### Sulfate de calcium

On entend par « sulfate de calcium » selon la présente invention tout matériau permettant d'apporter du sulfate ($SO_3$) au liant, tel que défini dans la norme EN 197-1 paragraphe 5.4.

Le sulfate de calcium selon l'invention peut notamment être choisi parmi le gypse, l'hémihydrate, l'anhydrite ou leurs mélanges. Le sulfate de calcium peut exister à l'état naturel ou peut provenir de l'industrie sous forme de sous-produit de certains procédés industriels.

La quantité de sulfate de calcium selon l'invention est ajustée de manière conventionnelle afin de se situer à l'optimum de la résistance mécanique en compression à 24h et à 20°C. De préférence, la quantité de sulfate de calcium selon l'invention, déterminée selon la méthode décrite dans la norme EN 196-2 paragraphe 8, se situe entre 2,0 et 3,5%, en pourcentage massique de sulfate ($SO_3$) par rapport à la masse du mélange (clinker + laitier + matériau complémentaire + sulfate de calcium).

### Eau

Le béton comprend différentes catégories d'eau. Tout d'abord, l'eau efficace est l'eau interne du béton, située entre les grains du squelette solide formé par les granulats, le clinker, le laitier et les matériaux complémentaires. L'eau efficace représente donc l'eau nécessaire pour l'hydratation et l'obtention de la consistance. D'autre part, le béton comprend de l'eau retenue par la porosité des granulats, du laitier et des matériaux complémentaires. Cette eau n'est pas prise en compte dans l'eau efficace. On la suppose prisonnière et ne participant pas à l'hydratation du ciment et à l'obtention de la consistance. L'eau totale représente la totalité de l'eau présente dans le mélange (au moment du malaxage).

Pré-mélanges liants secs

Le pré-mélange liant sec comprend, en proportions massiques :

- du clinker Portland sous forme de grains présentant un Dv97 allant de 10 à 30 $\mu$m,
  la quantité minimale dudit clinker en pourcentage massique étant déterminée selon la formule (I) pour un clinker présentant un Dv97 allant de 10 à 30 $\mu$m :

$$\left[ 26 \times \ln(Dv97_k) \right] - 43$$

Formule (I)

dans laquelle Dv97$_k$ est exprimé en $\mu$m
- du laitier, dont la quantité minimale en pourcentage massique est déterminée selon la formule (III) :

$$\left[ 1000 \div SSB_L \right] \times \left[ \left( -90 \times \ln(Dv97_k) \right) + 310 \right]$$

Formule (III)

dans laquelle

Dv97$_k$ est le Dv97 du clinker exprimé en $\mu$m,
SSB$_L$ est la surface spécifique Blaine du laitier exprimée en cm$^2$/g ;

la quantité totale de clinker dans le pré-mélange liant étant strictement inférieure à 60 %.

De préférence, la quantité minimale dudit clinker en pourcentage massique est déterminée selon la formule (I bis) pour un clinker présentant un Dv97 allant de 10 à 30 $\mu$m. On décrit également la formule (II bis) pour un clinker présentant une surface spécifique Blaine supérieure ou égale à 5300 cm$^2$/g :

$$\left[ 26 \times \ln(Dv97_k) \right] - 37$$

Formule (I bis)

dans laquelle Dv97$_k$ est exprimé en $\mu$m

$$\left[ -6.10^{-3} \times SSB_k \right] + 81$$

Formule (II bis)

dans laquelle SSB$_k$ est la surface spécifique Blaine du clinker exprimée en cm$^2$/g ; et la quantité minimale du laitier en pourcentage massique est déterminée selon la formule (III bis) dans le cas d'un mélange avec un clinker présentant un Dv97 allant de 10 à 30 $\mu$m. On décrit également la formule (IV bis) dans le cas d'un mélange avec un clinker présentant une surface spécifique Blaine supérieure ou égale à 5300 cm$^2$/g :

$$\left[1000 \div SSB_L\right] \times \left[\left(-90 \times \ln(Dv97_k)\right) + 330\right]$$

Formule (III bis)

dans laquelle

$Dv97_k$ est le Dv97 du clinker exprimé en $\mu$m,
$SSB_L$ est la surface spécifique Blaine du laitier exprimée en cm$^2$/g ;

$$\left[1000 \div SSB_L\right] \times \left[\left(0,021 \times SSB_k\right) - 83\right]$$

Formule (IV bis)

dans laquelle $SSB_k$ et $SSB_L$ sont respectivement la surface spécifique Blaine du clinker et du laitier exprimées en cm$^2$/g.

Dans toutes les formules (I bis) et (III bis), « ln » signifie logarithme népérien.

Le pré-mélange liant sec comprend en outre des matériaux complémentaires présentant un Dv90 inférieur ou égal à 200 $\mu$m.

Le pré-mélange liant sec comprend en outre du sulfate de calcium.

Le clinker, le laitier et les matériaux complémentaires peuvent être avantageusement combinés selon les proportions énoncées ci-dessus pour former des pré-mélanges liants secs (dépourvus d'eau ajoutée), destinés à être gâchés avec des granulats et de l'eau.

Des pré-mélanges liants secs particulièrement avantageux sont les suivants :

- clinker, laitier et poudre calcaire ;
- clinker, laitier et cendres volantes ;

Avantageusement, on peut également prévoir dans ces pré-mélanges secs un ou plusieurs adjuvants classiquement utilisés dans le domaine : un accélérateur et / ou un agent entraîneur d'air et / ou un agent viscosant et / ou un retardateur et / ou un inertant des argiles et / ou un fluidifiant. En particulier, on inclut un fluidifiant (superplastifiant), notamment de type polycarboxylate, en une teneur de 0,05 à 1,5%, de préférence de 0,1 à 0,8%, pourcentages en masse.

On entend par « inertant des argiles » toute molécule permettant de diminuer ou annuler l'effet néfaste des argiles sur les propriétés des liants hydrauliques. On peut notamment utiliser les inertants des argiles tels que décrits dans les documents WO 2006/032785 et WO 2006/032786.

Granulats

La définition des granulats selon l'invention est celle de la norme XPP18-545, sachant que les granulats selon l'invention ont une taille maximale Dmax inférieure ou égale à 32 mm. Les granulats selon l'invention comprennent du sable (grains de taille maximale Dmax inférieure à 4 mm, définie en tant que passant de tamis - norme EN 12620 paragraphe 3.8), et/ou des gravillons (grains ou cailloux de taille minimale Dmin supérieure à 4 mm, définie en tant que refus de tamis - norme EN 12620 paragraphe 3.9).

Les granulats peuvent être de nature calcaire, siliceuse ou silico-calcaire.

Le sable et les gravillons peuvent être roulés et/ou concassés. Un sable concassé comprend une proportion de fines plus importante qu'un sable roulé. Selon le vocabulaire en usage dans le domaine du sable, les fines sont les grains de dimension inférieure à 63 $\mu$m (passant de tamis).

Lorsque le sable comprend des fines en quantité supérieure à 1% (fraction massique dans le sable), il importe de tenir compte de la quantité de fines apportée par le sable, en diminuant la quantité des « matériaux complémentaires » décrites ci-dessus d'une quantité égale à la quantité de fines présente dans le sable (fraction inférieure à 63 $\mu$m) au-delà du seuil de 1%.

De préférence, la teneur en argile dans le sable et les granulats est inférieure à 1 %. En effet, de fortes teneurs d'argiles affectent négativement l'ouvrabilité des bétons.

Le rapport massique de la quantité de sable sur la quantité de gravillons est comprise entre 1,5:1 et 1:1,8, plus particulièrement entre 1,25:1 et 1:1,4, notamment entre 1,2:1 et 1:1,2, et idéalement est égal ou proche de 1:1.

Mélanges liants secs

Les granulats, le clinker, le laitier, les matériaux complémentaires, l'agent fluidifiant, les éventuels autres adjuvants peuvent être associés en mélanges liants secs (dépourvus d'eau ajoutée). De tels mélanges liants secs peuvent être préparés soit en mélangeant un pré-mélange liant sec sus-défini avec les granulats, soit en mélangeant directement les différents constituants *ab initio.*

Les proportions volumiques des différents constituants peuvent alors être définies comme suit :

- au moins 10% du pré-mélange liant sec susmentionné ; et
- jusqu'à 90 % de granulats.

Le mélange liant sec comprend des matériaux complémentaires.

Le mélange liant sec comprend en outre du sulfate de calcium.

Un mélange liant sec ainsi défini peut être un béton sec prêt à l'emploi, utilisable par simple gâchage avec l'eau.

On décrit un mélange liant sec, dans lequel les proportions volumiques des différents constituants peuvent être définies comme suit :

- au moins 10% du pré-mélange liant sec susmentionné ; et
- jusqu'à 90 % de gravillons.

Le mélange liant sec comprend en outre du sulfate de calcium.

On décrit un mélange liant sec, dans lequel les proportions volumiques des différents constituants peuvent être définies comme suit :

- au moins 10% du pré-mélange liant sec susmentionné ; et
- jusqu'à 90 % de sable.

Le mélange liant sec comprend en outre du sulfate de calcium.

Béton

Par le terme « béton humide » selon l'invention on entend le béton frais (voir norme EN 206-1 paragraphe 3.1.2).

Le béton humide selon l'invention est préparé en gâchant :

- au moins 10% en volume du pré-mélange liant sec comprenant des matériaux complémentaires ; et
- jusqu'à 90 % en volume de granulats ;
- avec de 140 à 220 l/m$^3$ d'eau efficace.

Les pourcentages correspondant à des proportions par rapport au volume total sec. Le béton humide selon l'invention comprend en outre du sulfate de calcium.

Le béton humide peut également être préparé directement en gâchant le mélange sec défini ci-dessus avec de 140 à 220 l/m$^3$ d'eau efficace.

Le béton selon l'invention peut également être préparé en gâchant directement les différents ingrédients entre eux et avec de l'eau. Est décrit un procédé de préparation d'une composition de béton humide comprenant une étape de gâchage de :

- clinker Portland sous forme de grains présentant un Dv97 allant de 10 à 30 $\mu$m ou présentant une surface spécifique Blaine supérieure ou égale à 5300 cm$^2$/g, de préférence supérieure ou égale à 5500 cm$^2$/g,

la quantité minimale dudit clinker en kg/m$^3$ étant déterminée selon la formule (V) pour un clinker présentant un Dv97 allant de 10 à 30 $\mu$m, ou selon la formule (VI) pour un clinker présentant une surface spécifique Blaine supérieure ou égale à 5300 cm$^2$/g :

$$\left[\left(90 \times \ln(Dv97_k)\right) - 150\right] \times (E_{eff} \div 140)$$

Formule (V)

dans laquelle

$Dv97_k$ est le Dv97 du clinker exprimé en $\mu$m,
$E_{eff}$ est la quantité d'eau efficace en $l/m^3$

$$\left[\left(-0,021 \times SSB_k\right) + 263\right] \times \left(E_{eff} \div 140\right)$$

Formule (VI)

dans laquelle

$SSB_k$ est la surface spécifique Blaine du clinker exprimée en $cm^2/g$,
$E_{eff}$ est la quantité d'eau efficace en $l/m^3$ ;

- laitier, dont la quantité minimale en $kg/m^3$ est déterminée selon la formule (VII) dans le cas d'un mélange avec un clinker présentant un Dv97 allant de 10 à 30 $\mu$m, ou selon la formule (VIII) dans le cas d'un mélange avec un clinker présentant une surface spécifique Blaine supérieure ou égale à 5300 $cm^2/g$ :

$$\left(3500 \div SSB_L\right) \times \left[-90 \times \ln(Dv97_k) + 310\right] \times \left(E_{eff} \div 140\right)$$

Formule (VII)

dans laquelle

$Dv97_k$ est le Dv97 du clinker exprimé en $\mu$m,
$SSB_L$ est la surface spécifique Blaine du laitier exprimée en $cm^2/g$,
$E_{eff}$ est la quantité d'eau efficace en $l/m^3$ ;

$$\left(3500 \div SSB_L\right) \times \left[0,021 \times SSB_k - 103\right] \times \left(E_{eff} \div 140\right)$$

Formule (VIII)

dans laquelle

$SSB_k$ et $SSB_L$ sont respectivement la surface spécifique Blaine du clinker et du laitier exprimées en $cm^2/g$,
$E_{eff}$ est la quantité d'eau efficace en $l/m^3$ ;

- sulfate de calcium ;
- matériaux complémentaires, présentant un Dv90 inférieur ou égal à 200 $\mu$m, dont la quantité minimale en $kg/m^3$ est déterminée selon la formule (IX) suivante :

$$220 - (\text{quantité de laitier}) - (\text{quantité de clinker}) - (\text{quantité de sulfate de calcium})$$

Formule (IX) ;

- de 1500 à 2200 $kg/m^3$, de préférence de 1700 à 2000 $kg/m^3$ de granulats ;
- un agent fluidifiant ;
- éventuellement un accélérateur et / ou un agent entraîneur d'air et / ou un agent viscosant et / ou un retardateur et / ou un inertant des argiles ; avec
- de 140 à 220 $l/m^3$ d'eau efficace,

la quantité totale de clinker dans le béton humide étant inférieure ou égale à 200 $kg/m^3$.
On entend par « $kg/m^3$ » la masse de matériaux à utiliser par $m^3$ de béton produit.

De préférence, la quantité minimale dudit clinker en kg/m$^3$ est déterminée selon la formule (V bis) pour un clinker présentant un Dv97 allant de 10 à 30 $\mu$m, ou selon la formule (VI bis) pour un clinker présentant une surface spécifique Blaine supérieure ou égale à 5300 cm$^2$/g :

$$\left[\left(90 \times \ln(Dv97_k)\right) - 130\right] \times (E_{eff} \div 140)$$

<div align="right">Formule (V bis)</div>

dans laquelle

Dv97$_k$ est le Dv97 du clinker exprimé en $\mu$m,
E$_{eff}$ est la quantité d'eau efficace en l/m$^3$ ;

$$\left[\left(-0,021 \times SSB_k\right) + 283\right] \times (E_{eff} \div 140)$$

<div align="right">Formule (VI bis)</div>

dans laquelle SSB$_k$ est la surface spécifique Blaine du clinker exprimée en cm$^2$/g,
E$_{eff}$ est la quantité d'eau efficace en l/m$^3$ ;

et la quantité minimale de laitier en kg/m$^3$ est déterminée selon la formule (VII bis) dans le cas d'un mélange avec un clinker présentant un Dv97 allant de 10 à 30 $\mu$m, ou selon la formule (VIII bis) dans le cas d'un mélange avec un clinker présentant une surface spécifique Blaine supérieure ou égale à 5300 cm$^2$/g :

$$(3500 \div SSB_L) \times \left[-90 \times \ln(Dv97_k) + 330\right] \times (E_{eff} \div 140)$$

<div align="right">Formule (VII bis)</div>

dans laquelle Dv97$_k$ est le Dv97 du clinker exprimé en $\mu$m,
SSB$_L$ est la surface spécifique Blaine du laitier exprimée en cm$^2$/g, E$_{eff}$ est la quantité d'eau efficace en l/m$^3$ ;

$$(3500 \div SSB_L) \times \left[0,021 \times SSB_k - 83\right] \times (E_{eff} \div 140)$$

<div align="right">Formule (VIII bis)</div>

dans laquelle SSB$_k$ et SSB$_L$ sont respectivement la surface spécifique Blaine du clinker et du laitier exprimées en cm$^2$/g,
E$_{eff}$ est la quantité d'eau efficace en l/m$^3$.

Dans toutes les formules (V bis) et (VII bis), « ln » signifie logarithme népérien.

La quantité dudit clinker utilisée est préférentiellement inférieure à 180 kg/m3, avantageusement inférieure à 150 kg/m$^3$, de préférence inférieure à 120 kg/m$^3$.

De préférence, la quantité minimale de matériaux complémentaires en kg/m$^3$ est déterminée selon la formule (IX bis) suivante :

$$250 - (\text{quantité de laitier}) - (\text{quantité de clinker}) - (\text{quantité de sulfate de calcium})$$

<div align="right">Formule (IX bis)</div>

Selon un mode de réalisation du procédé de préparation du béton humide, la quantité d'eau efficace utilisée varie de 140 à 200 l/m$^3$, de préférence de 150 à 180 l/m$^3$.Selon certains modes, cette quantité d'eau efficace est donc réduite par rapport à un béton classique.

De préférence les granulats comprennent du sable et des gravillons et le rapport massique de la quantité de sable sur la quantité de gravillons est comprise entre 1,5:1 et 1:1,8, plus particulièrement entre 1,25:1 et 1:1,4, notamment entre 1,2:1 et 1:1,2, et idéalement est égal ou proche de 1:1.

Les matériaux en question présentent, selon des modes de réalisation particuliers, les mêmes caractéristiques que celles qui ont été décrites ci-dessus en relation avec les mélanges et pré-mélanges liants.

Le malaxage s'effectue au moyen d'un malaxeur conventionnel en centrale à béton ou directement dans un camion-toupie-malaxeur, pendant une durée de malaxage usuelle dans le domaine.

Les compositions de béton humide selon l'invention présentent des propriétés mécaniques comparables, de préférence au moins aussi bonnes voire meilleures par rapport aux bétons de type C25/30 classiques, notamment en terme de résistance à la compression à 16h et à 28 jours et en terme de rhéologie.

En particulier, selon un mode de réalisation de l'invention, la résistance moyenne à la compression est supérieure ou égale à 4 MPa, de préférence supérieure ou égale à 5 MPa, à 20 °C 16h après le gâchage, et supérieure ou égale à 25 MPa, de préférence supérieure ou égale à 28 MPa, 28 jours après le gâchage.

Selon un mode de réalisation du béton humide selon l'invention, l'affaissement au cône d'Abrams (ou valeur de slump) est compris entre 0 et 250 mm, de préférence entre 100 et 240 mm, la mesure étant effectuée selon la norme européenne EN 12350-2, de décembre 1999.

Selon un mode de réalisation du béton humide selon l'invention, l'étalement à une minute est compris entre 50 et 140 mm, de préférence entre 85 et 105 mm en utilisant le cône de la norme ASTM C230 en l'absence de vibrations.

Selon un mode de réalisation du béton humide selon l'invention, l'étalement à une minute est compris entre 180 et 270 mm, de préférence entre 215 et 235 mm en utilisant le cône de la norme ASTM C230 en présence de vibrations, la mesure étant effectuée comme indiqué à l'exemple 6 ci-dessous.

Ainsi les bétons selon l'invention présentent des propriétés rhéologiques équivalentes aux bétons C25/30 classiques.

De préférence, les bétons selon l'invention sont des bétons à seuil. On entend par « béton à seuil » un béton (humide) qui nécessite l'apport d'une énergie positive (par exemple, une force de cisaillement, une vibration ou un choc) afin de déclencher son écoulement. Par opposition, un béton sans seuil s'écoule tout seul, sans apport d'énergie extérieure. Ainsi, le béton à seuil se comporte essentiellement, en dessous d'une énergie seuil, comme un solide élastique déformable ; et au-dessus de cette énergie seuil, comme un fluide visqueux.

La quantité de clinker utilisée pour préparer le béton selon l'invention est très inférieure à celle qui est nécessaire pour préparer un béton classique de type C25/30, ce qui permet de réaliser des économies spectaculaires en terme d'émission de $CO_2$. Par rapport à une formule C25/30 de référence qui contient 95 kg/m$^3$ de calcaire et 260 kg/m$^3$ de ciment, un béton selon l'invention contenant par exemple entre 100 et 120 kg/m$^3$ de clinker permet de réaliser une économie d'émission de $CO_2$ de l'ordre de 50 à 60 %.

Le béton selon l'invention peut être coulé selon les méthodes usuelles ; après hydratation / durcissement on obtient des objets en béton durci tels que des éléments de construction, des éléments d'ouvrage d'art ou autres.

EXEMPLES

Les exemples suivants illustrent l'invention sans la limiter.

Exemple 1 : méthode de granulométrie laser

Les courbes granulométriques des différentes poudres sont obtenues à partir d'un granulomètre laser Malvern MS2000. La mesure s'effectue en voie humide (milieu aqueux) ; la taille des particules doit être comprise entre 0,02 $\mu$m et 2 mm. La source lumineuse est constituée par un laser rouge He-Ne (632 nm) et une diode bleue (466 nm). Le modèle optique est celui de Fraunhofer, la matrice de calcul est de type polydisperse.

Une mesure de bruit de fond est d'abord effectuée avec une vitesse de pompe de 2000 tr/min, une vitesse d'agitateur de 800 tr/min et une mesure du bruit sur 10 s, en l'absence d'ultrasons. Durant la phase de calibration / mesure de blanc de l'appareil, on vérifie que l'intensité lumineuse du laser est au moins égale à 80%, et que l'on obtient une courbe exponentielle décroissante pour le bruit de fond. Si ce n'est pas le cas, les lentilles de la cellule doivent être nettoyées.

On effectue ensuite une première mesure sur l'échantillon avec les paramètres suivants : vitesse de pompe de 2000 tr/min, vitesse d'agitateur de 800 tr/min, absence d'ultrasons. L'échantillon est introduit pour avoir une obscuration comprise entre 10 et 20 %. On entend par « obscuration » l'extinction du signal laser par la suspension circulant entre l'émetteur et le capteur central (turbidimètre). Une obscuration de 100 % correspond à une extinction complète du signal. Au contraire, une obscuration de 0 % correspond au fluide pur translucide sans aucune particule. L'obscuration dépend de la concentration en solides de la suspension et de l'indice de réfraction des particules. Après stabilisation de l'obscuration, la mesure est effectuée avec une durée entre l'immersion et la mesure fixée à 10 s. La durée de mesure est de 30 s (30000 images de diffraction analysées). Dans le granulogramme obtenu, il faut tenir compte du fait qu'une partie de la population de la poudre peut être agglomérée.

On effectue ensuite une seconde mesure (sans vidanger la cuve) avec des ultrasons. La vitesse de pompe est portée à 2500 tr/min, l'agitation à 1000 tr/min, les ultrasons sont émis à 100 % (30 watts). Ce régime est maintenu pendant 3 minutes, puis on revient aux paramètres initiaux : vitesse de pompe de 2000 tr/min, vitesse d'agitateur de 800 tr/min, absence d'ultrasons. Au bout de 10 s (pour évacuer les bulles d'air éventuelles), on effectue une mesure de 30 s (30000 images analysées). Cette seconde mesure correspond à une poudre désagglomérée par dispersion ultrasonique.

Chaque mesure est répétée au moins deux fois pour vérifier la stabilité du résultat. L'appareil est étalonné avant chaque séance de travail au moyen d'un échantillon standard (silice C10 Sifraco) dont la courbe granulométrique est connue. Toutes les mesures présentées dans la description et les gammes annoncées correspondent aux valeurs obtenues avec ultrasons.

Exemple 2 : méthode de mesure de la surface spécifique

Surface spécifique BET :

La surface spécifique des différentes poudres est mesurée comme suit. On prélève un échantillon de poudre de masse suivante : 0,1 à 0,2 g pour une surface spécifique estimée à plus de 30 m$^2$/g ; 0,3 g pour une surface spécifique estimée à 10-30 m$^2$/g; 1 g pour une surface spécifique estimée à 3-10 m$^2$/g ; 1,5 g pour une surface spécifique estimée à 2-3 m$^2$/g ; 2 g pour une surface spécifique estimée à 1.5-2 m$^2$/g ; 3 g pour une surface spécifique estimée à 1-1,5 m$^2$/g.

On utilise une cellule de 3 cm$^3$ ou de 9 cm$^3$ selon le volume de l'échantillon. On pèse l'ensemble de la cellule de mesure (cellule + tige en verre). Puis on ajoute l'échantillon dans la cellule : le produit ne doit pas être à moins d'un millimètre du haut de l'étranglement de la cellule. On pèse l'ensemble (cellule + tige en verre + échantillon). On met en place la cellule de mesure sur un poste de dégazage et on dégaze l'échantillon. Les paramètres de dégazage sont de 30 min / 45°C pour le ciment Portland, le gypse, les pouzzolanes ; de 3 h / 200°C pour les laitiers, fumées de silice, cendres volantes, ciment alumineux, calcaire ; et de 4 h / 300°C pour l'alumine de contrôle. La cellule est rapidement bouchée avec un bouchon après le dégazage. On pèse l'ensemble et on note le résultat. Toutes les pesées sont effectuées sans le bouchon. La masse de l'échantillon est obtenue par soustraction de la masse de la cellule à la masse de la cellule + échantillon dégazé.

On effectue ensuite l'analyse de l'échantillon après l'avoir mis en place sur le poste de mesure. L'analyseur est le SA 3100 de Beckman Coulter. La mesure repose sur l'adsorption d'azote par l'échantillon à une température donnée, ici la température de l'azote liquide soit -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. L'écart-type de reproductibilité obtenu à partir de 10 mesures sur une silice de surface spécifique 21,4 m$^2$/g est de 0,07. L'écart-type de reproductibilité obtenu à partir de 10 mesures sur un ciment de surface spécifique 0,9 m$^2$/g est de 0,02. Une fois toutes les deux semaines un contrôle est effectué sur un produit de référence. Deux fois par an, un contrôle est réalisé avec l'alumine de référence fournie par le constructeur.

Surface spécifique Blaine :

Elle est déterminée selon la norme EN 196-6 paragraphe 4.

Exemple 3 : matières premières utilisées

Dans ce qui suit, on utilise plus particulièrement les matériaux suivants.

Ciment : on utilise un ciment CPA CEM I 52.5 (provenance Lafarge Ciments - cimenterie de Saint-Pierre la Cour, dit « SPLC »). Deux modes d'obtention ont été utilisés : la sélection et la micronisation.
La sélection est réalisée au moyen d'un séparateur Alpine Hosokawa AFG100. Une qualité de ciment est produite suivant ce mode : le ciment « SPLC dv97=16μm sélecté » (vitesse de turbine de 13000 tours par minute, 42,95 % de matière récupérée) ;
La micronisation est réalisée par un broyeur à jets d'air opposés Alpine Hosokawa AFG200. La vitesse de rotation de la turbine a été réglée de manière à obtenir un dv97 de 15 μm. Ce ciment micronisé sera appelé par la suite : « SPLC dv97=15μm micronisé »

Le profil granulométrique de ces deux qualités de ciment est visible sur la **Figure 1.** Ce ciment est obtenu à partir d'un mélange de base de 95 % de clinker, 2 % de calcaire et 3 % filler, auquel est ajouté 5 % de gypse ou d'anhydrite et éventuellement des agents de mouture et / ou réducteurs du chrome VI. Ainsi, le ciment comprend au moins 90 % de clinker.

Pour le béton témoin (C25/30 de référence), on utilise du ciment HTS CEM I 52.5 PMES Le Teil (fournisseur Lafarge).

Le laitier provient de Fos sur Mer. Il a été broyé industriellement. Deux finesses ont été utilisées : 3260 et 3500 $cm^2/g$ (Surface Blaine). Un échantillon du laitier à 3260 $cm^2/g$ de surface Blaine a été micronisé à une surface Blaine de 9150 $cm^2$ à l'aide d'un broyeur à jets d'air opposés Alpine Hosokawa AFG200. Les appellations des différents lots de laitier font référence aux surfaces Blaine comme suit :

- « Laitier 3500 $cm^2/g$ » ;
- « Laitier 3260 $cm^2/g$ » ;
- « Laitier 9150 $cm^2/g$ micronisé » ;

Les profils granulométriques des laitiers à 3260 $cm^2/g$ et 9150 $cm^2/g$ de surface Blaine sont visibles sur la **Figure 3.**

Matériaux complémentaires : on utilise les fillers calcaires dont la liste suit.

- Calgar 40 (Provençale SA) avec une surface spécifique BET de 0,99 $m^2/g$ et une valeur au bleu de méthylène $MB_F$ de 0,6 g/100 g selon la norme NF EN 933-9;
- Mikhart 15 (fournisseur Provençale SA) avec une surface spécifique BET de 1,2 $m^2/g$ et une valeur au bleu de méthylène $MB_F$ de 0,27 g / 100 g selon la norme NF EN 933-9 ;
- BL200 (fournisseur Omya) avec une surface spécifique BET de 0,86 $m^2/g$ et une valeur au bleu de méthylène $MB_F$ de 0,3 g/100 g selon la norme NF EN 933-9 ;
- Calgar FV (Provençale SA) avec une surface spécifique BET de 1,08 $m^2/g$ et une valeur au bleu de méthylène $MB_F$ de 0,3 g/100 g selon la norme NF EN 933-9.

Le profil granulométrique de ces matériaux est visible sur la **Figure 2.**

Adjuvant :

Les produits utilisés dans les exemples sont :

- Superplastifiant « Optima 203 » de Chryso, qui est de type polycarboxylate ;

- Plastifiant « Chrysoplast 209 » de Chryso, qui est de type lignosulfonate ;

- Superplastifiant « Premia 180 » de Chryso, qui est de type polycarboxylate ;

- Plastifiant « Optima 100 » de Chryso, qui est de type polyphosphonate ;

- Plastifiant « Oméga 101 » de Chryso, qui est de type polycarboxylate ;

- Antimousse « TBP », qui est à base de Tributylphosphate.

Granulats : on utilise les matériaux dont la liste suit :

- Sable 0/3,15 de Cassis (sable concassé) ;

- Sable de Honfleur 0/4R (sable roulé alluvionnaire) ;

- Sable St Bonnet 0/5R (sable roulé alluvionnaire) ;

- Granulats 6,3/10 de Cassis (gravillons concassés).

Le profil de distribution granulométrique de ces matériaux est représenté à la **Figure 4.**

Exemple 4 : formulations de béton selon l'invention

Les formules qui suivent sont des formules de compositions de béton selon l'invention, à l'exception de la formule C25/30 qui est un témoin. Les matériaux utilisés sont ceux décrits à l'exemple 3. Chaque nombre correspond à la masse de matériau utilisée (en kg) pour préparer 1 m$^3$ de béton.

| Formule G3-1 (hors invention) | |
|---|---|
| Granulats Cassis 6,3/10 | 941,5 |
| Sable Honfleur 0/4R | 941,5 |
| Ciment SPLC dv97=16$\mu$m sélecté | 100 |
| Filler BL200 | 218,8 |
| Laitier 3500 cm$^2$/g | 60 |
| Adjuvant Optima 203 | 2,3 |
| Eau totale | 164,2 |
| Eau efficace | 142 |

| Formule G3-2 | |
|---|---|
| Granulats Cassis 6,3/10 | 941,5 |
| Sable Cassis 0/3,15 | 941,5 |
| Ciment SPLC dv97=16$\mu$m sélecté | 100 |
| Filler BL200 | 93,8 |
| Laitier 3500 cm$^2$/g | 60 |
| Adjuvant Optima 203 | 2,3 |
| Eau totale | 164,2 |
| Eau efficace | 145 |

Dans la formule G3-2 la quantité de filler est réduite par rapport à la formule G3-1 car le sable utilisé (concassé et non roulé) comporte une quantité importante de fines, dont on tient compte dans la fraction des matériaux complémentaires.

| Formule G3-3 (hors invention) | |
|---|---|
| Granulats Cassis 6,3/10 | 941,5 |
| Sable Honfleur 0/4R | 941,5 |
| Ciment SPLC dv97=16$\mu$m sélecté | 100 |
| Filler Calgar FV | 218,8 |
| Laitier 3500 cm$^2$/g | 60 |
| Adjuvant Optima 203 | 2,5 |
| Eau totale | 164 |
| Eau efficace | 142 |

| Formule G3-4 (hors invention) | |
|---|---|
| Granulats Cassis 6,3/10 | 941,5 |
| Sable Honfleur 0/4R | 941,5 |
| Ciment SPLC dv97=16$\mu$m sélecté | 100 |
| Filler Calgar 40 | 217,9 |
| Laitier 3500 cm$^2$/g | 60 |
| Adjuvant Optima 203 | 3 |
| Eau totale | 163,6 |
| Eau efficace | 142 |

Formule G3-5 (hors invention)

| | |
|---|---|
| Granulats Cassis 6,3/10 | 941,5 |
| Sable Honfleur 0/4R | 941,5 |
| Ciment SPLC dv97=16$\mu$m sélecté | 100 |
| Filler Mikhart 15 | 217,9 |
| Laitier 3500 cm$^2$/g | 60 |
| Adjuvant Optima 203 | 3,5 |
| Eau totale | 163,2 |
| Eau efficace | 142 |

Formule G4-1

| | |
|---|---|
| Granulats Cassis 6,3/10 | 920 |
| Sable Honfleur 0/4R | 920 |
| Ciment SPLC dv97=16$\mu$m sélecté | 120 |
| Filler BL200 | 126 |
| Laitier 3500 cm$^2$/g | 100 |
| Adjuvant CHRYSOPLAST 209 | 0,80 |
| Eau totale | 193 |
| Eau efficace | 171 |

Formule G4-2

| | |
|---|---|
| Granulats Cassis 6,3/10 | 920 |
| Sable Honfleur 0/4R | 920 |
| Ciment SPLC dv97=16$\mu$m sélecté | 120 |
| Filler BL200 | 144 |
| Laitier 3500 cm$^2$/g | 80 |
| Adjuvant CHRYSOPLAST 209 | 1,02 |
| Eau totale | 195 |
| Eau efficace | 173 |

Les formules G4-3 et G4-4 mettent en évidence l'impact de la finesse du laitier sur son dosage.

Formule G4-3

| | |
|---|---|
| Granulats Cassis 6,3/10 | 920 |
| Sable St Bonnet 0/5R | 920 |
| Ciment SPLC dv97=15$\mu$m micronisé | 120 |
| Filler BL200 | 144 |
| Laitier 3260 cm$^2$/g | 80 |
| Adjuvant OMEGA 101 | 0,86 |
| Adjuvant TBP | 0,03 |
| Eau totale | 184,1 |
| Eau efficace | 161 |

Formule G4-4

| | |
|---|---|
| Granulats Cassis 6,3/10 | 920 |

(suite)

| | |
|---|---|
| Sable St Bonnet 0/5R | 920 |
| Ciment SPLC dv97=15μm micronisé | 120 |
| Filler BL200 | 181 |
| Laitier 9150 cm²/g | 40 |
| Adjuvant OMEGA 101 | 1,07 |
| Adjuvant TBP | 0,03 |
| Eau totale | 184,1 |
| Eau efficace | 161 |

Formule C25/30 (référence)

| | |
|---|---|
| Granulats Cassis 6,3/10 | 900 |
| Sable Honfleur 0/4R | 900 |
| Ciment CEM I 52,5 N HTS Le Teil | 257 |
| Filler BL200 | 95 |
| Adjuvant CHRYSOPLAST 209 | 0,54 |
| Eau totale | 189 |
| Eau efficace | 173 |

Exemple 5 : performances des bétons selon l'invention

Les performances des bétons selon l'invention sont évaluées sur les points qui suivent.

- Résistance à la compression. Celle-ci est déterminée selon la norme EN 12390-3 sur éprouvettes cylindriques, conservées selon la norme EN 12390-2 à 20°C ±2°C et humidité relative supérieure à 95%.

Le résultat des mesures de résistance moyenne à la compression est reporté dans le tableau 1 ci-dessous : il montre en particulier que les formulations ci-dessus permettent d'obtenir une résistance moyenne à la compression supérieure ou égale à 4 MPa à 16 h et supérieure ou égale à 25 MPa (voire voisine de 30 MPa) à 28 jours.

Tableau 1 - résistances moyennes à la compression (en MPa) jusqu'à 28 jours mesurées sur cylindre de diamètre 70 mm.

| | Echéance : 16 h | Echéance : 24 h | Echéance : 28 j |
|---|---|---|---|
| C25/30 réf | nm | 9,8 | 32,2 |
| G3-1 | 5,4 | 6,3 | 29,8 |
| G3-2 | nm | 7,5 | nm |
| G3-3 | 5,4 | 6,5 | 29,1 |
| G3-4 | 5,4 | 6,9 | 29,1 |
| G3-5 | 5,5 | 6,7 | 29,2 |
| G4-1 | 6,1 | 7,9 | 36,8 |
| G4-2 | nm | nm | 30,1 |
| G4-3 | 4,1 | 6,1 | 29,4 |
| G4-4 | 4,1 | 6,2 | 28,1 |
| nm = non mesuré. | | | |

On évalue également la rhéologie des compositions de béton ci-dessus. Pour cela, on effectue une mesure de l'étalement "statique" et "vibré" comme suit :
On utilise le cône ASTM décrit dans la norme ASTM C230. Le cône est positionné sur une table vibrante électromagnétique SINEX TS100 dotée d'un plateau carré de 600 mm x 600 mm (fréquence 50 Hz, amplitude 0,5 mm). La mesure d'étalement est faite sur une surface sèche. L'étalement est mesuré selon 3 directions, on retient la valeur moyenne arrondie à 5 mm près.

Pour la préparation : on introduit 2 litres de mélange sec dans la cuve ; on mélange 30 secondes à sec à petite vitesse ; on arrête le mélangeur ; on introduit la quantité totale d'eau et l'adjuvant liquide ; on malaxe 2 minutes à petite vitesse. A la fin de la gâchée, soit 2 minutes après le contact eau (T=2 min), le cône est rempli en une fois et arasé, puis on soulève le cône.

A T=3 min, on mesure l'étalement "statique" après une minute d'attente.
A T=3. min 15, on met en route une vibration à 50Hz et 0,5 mm d'amplitude durant 30s.
A T=3 min 45, on mesure l'étalement "vibré".

Le béton est récupéré et conservé dans un sac plastique fermé afin d'éviter le dessèchement entre les mesures. Avant chaque prélèvement, la pâte est légèrement agitée à l'aide d'une spatule.

A T= 10 min, le cône est rempli en une fois, arasé puis on soulève le cône.
A T= 11 min, on mesure l'étalement "statique" après une minute d'attente.
A T=11 min 15, on met en route une vibration à 50Hz et 0,5 mm d'amplitude durant 30 s.
A T=11 min 45, on mesure l'étalement "vibré.

Les résultats sont reportés dans le tableau 2 ci-dessous. Ils montrent que les bétons formulés selon l'invention présentent des performances acceptables en terme de rhéologie, voire aussi bonnes que celles d'un béton C25/30 classique. La différence entre les résultats obtenus avec et sans vibrations met en évidence un comportement de fluide à seuil (comme pour un béton C25/30 classique).

Tableau 2 - performances rhéologiques (les étalements sont donnés en mm)

| | Etalement à 3 min statique | Etalement à 11 min statique | Etalement à 3 min 45 vibré | Etalement à 11 min 45 vibré |
|---|---|---|---|---|
| C25/30 | 95 | 95 | 225 | 225 |
| G3-1 | 95 | 95 | 230 | 230 |
| G3-2 | 100 | 100 | 225 | 225 |
| G3-3 | 90 | 90 | 225 | 220 |
| G3-4 | 90 | 90 | 225 | 220 |
| G3-5 | 90 | 90 | 225 | 225 |
| G4-1 | 100 | 100 | 220 | 215 |
| G4-2 | nm | 95 | nm | 225 |
| G4-3 | 95 | nm | 215 | nm |
| G4-4 | 100 | nm | 215 | nm |
| nm = non mesuré. | | | | |

**Revendications**

1. Composition de béton humide, comprenant de 140 à 220 l/m3 d'eau efficace en association avec :

- au moins 10% en volume de pré-mélange liant sec comprenant en proportions massiques :

• du clinker Portland sous forme de grains présentant un Dv97 allant de 10 à 30 $\mu$m, la quantité minimale dudit clinker en pourcentage massique correspondant à la valeur déterminée selon la formule (I)

$$\left[26 \times \ln(Dv97_k)\right] - 43$$

Formule (I)

dans laquelle $Dv97_k$ est le DV97 du clinker exprimé en $\mu$m ;
la quantité totale de clinker dans le pré-mélange liant étant strictement inférieure à 60 % ;

• du laitier de haut fourneau selon la norme EN 197-1 paragraphe 5.2.2 présentant un taux de verre de 80% au minimum, broyé à une finesse minimale $SSB_L$ de 2500 $cm^2$/g, dont la quantité minimale en pourcentage massique correspond à la valeur déterminée selon la formule (III)

$$\left[1000 \div SSB_L\right] \times \left[\left(-90 \times \ln(Dv97_k)\right) + 310\right]$$

Formule (III)

dans laquelle $Dv97_k$ est le Dv97 du clinker exprimé en $\mu$m,
$SSB_L$ est la surface spécifique Blaine du laitier exprimée en $cm^2$/g

• des matériaux complémentaires présentant un Dv90 inférieur ou égal à 200 $\mu$m choisis parmi les poudres calcaires ou les cendres volantes;
• du sulfate de calcium ;
• 0,05 à 1,5% en masse d'un agent fluidifiant ; et

- jusqu'à 90 % en volume de granulats comprenant du sable et des gravillons, le rapport massique de la quantité de sable sur la quantité de gravillons étant compris entre 1,5 :1 et 1 :1,8;

les pourcentages correspondant à des proportions par rapport au volume total sec.

2. Composition de béton humide selon la revendication 1, **caractérisée en ce que** la proportion massique en agent fluidifiant dans le pré-mélange varie de 0,1 à 0,8%.

3. Composition de béton humide selon la revendication 1, **caractérisée en ce que** l'agent fluidifiant est de type polycarboxylate.

4. Composition de béton humide selon la revendication 1, **caractérisée en ce que** le rapport massique de la quantité de sable sur la quantité de gravillons étant compris entre 1,25 :1 et 1 :1,4.

5. Composition de béton humide selon la revendication 1 comprenant de 140 à 200 l/m3, de préférence de 150 à 180 l/m$^3$ d'eau efficace.

6. Objet en béton durci de la composition selon l'une quelconque des revendications précédentes.

7. Procédé de préparation d'une composition de béton humide comprenant une étape de gâchage d'au moins 10% en volume du pré-mélange selon l'une quelconque des revendications 1 à 5 avec jusqu'à 90 % en volume des granulats tels que définis à la revendication 1 et de 140 à 220 l/m3 d'eau efficace.

**Patentansprüche**

1. Nassbetonzusammensetzung, die von 140 bis 220 l/m3 wirksames Wasser in Verbindung mit Folgendem umfasst:

- mindestens 10 Vol.-% trockene Bindemittelvormischung, die in Massenanteilen umfasst:

• Portlandklinker in der Form von Körnern, die einen Dv97 von 10 bis 30 $\mu$m aufweisen, wobei die Mindestmenge des Klinkers in Massenprozent dem gemäß der Formel (I) bestimmten Wert entspricht

$$[26 \times \ln(Dv97_k)] - 43$$

Formel (I)

wobei $Dv97_k$ der DV97 des Klinkers, ausgedrückt in $\mu m$, ist;
die Gesamtmenge an Klinker in der Bindemittelvormischung strikt kleiner als 60 % ist;

• Hochofenschlacke gemäß der Norm EN 197-1, Abschnitt 5.2.2, die einen Glasanteil von mindestens 80 % aufweist, der auf eine Mindestfeinheit $SSB_L$ von 2500 cm$^2$/g gemahlen ist, dessen Mindestmenge in Massenprozent dem gemäß der Formel (III) bestimmten Wert entspricht

$$[1000 \div SSB_L] \times [(-90 \times \ln(Dv97_k)) + 310]$$

Formel (III)

wobei $Dv97_k$ der DV97 des Klinkers, ausgedrückt in $\mu m$, ist,
$SSB_L$ die spezifische Oberfläche (Blaine) der Schlacke, ausgedrückt in cm$^2$/g, ist

• ergänzende Materialien, die einen Dv90 von kleiner oder gleich 200 $\mu m$ aufweisen, die aus Kalkpulvern oder Flugaschen gewählt sind;
• Calciumsulfat;
• 0,05 bis 1,5 Massenprozent eines Verflüssigungsmittels; und

- bis zu 90 Vol.-% Granulate, die Sand und Kies umfassen, wobei das Massenverhältnis der Sandmenge zur Kiesmenge zwischen 1,5:1 und 1:1,8 beträgt;

wobei die Prozentsätze Anteilen bezogen auf das Gesamttrockenvolumen entsprechen.

2. Nassbetonzusammensetzung nach Anspruch 1, **dadurch gekennzeichnet, dass** der Massenanteil des Verflüssigungsmittels in der Vormischung von 0,1 bis 0,8 % schwankt.

3. Nassbetonzusammensetzung nach Anspruch 1, **dadurch gekennzeichnet, dass** das Verflüssigungsmittel vom Typ Polycarboxylat ist.

4. Nassbetonzusammensetzung nach Anspruch 1, **dadurch gekennzeichnet, dass** der Massenanteil der Sandmenge zur Kiesmenge zwischen 1,25:1 und 1:1,4 beträgt.

5. Nassbetonzusammensetzung nach Anspruch 1, die von 140 bis 200 l/m3, vorzugsweise von 150 bis 180 l/m3, wirksames Wasser, umfasst.

6. Gegenstand aus Festbeton mit der Zusammensetzung nach einem der vorhergehenden Ansprüche.

7. Verfahren zur Herstellung einer Nassbetonzusammensetzung, das einen Schritt des Anrührens von mindestens 10 Volumenprozent der Vormischung nach einem der Ansprüche 1 bis 5 mit bis zu 90 Vol.-% Granulaten nach Anspruch 1 und 140 bis 220 l/m3 wirksamem Wasser umfasst.

**Claims**

1. A composition of wet concrete, comprising from 140 to 220 l/m$^3$ of effective water in association with:

- at least 10% by volume of dry binder premix comprising in mass proportions:

• Portland clinker in the form of grains having a Dv97 ranging from 10 to 30 $\mu m$, the minimum amount of said clinker in mass percentage corresponding to the value determined according to formula (I)

$$[26 \times \ln(Dv97_k)] - 43$$

Formula (I)

in which $Dv97_k$ is the DV97 of the clinker expressed in $\mu$m;
the total amount of clinker in the binder premix being strictly less than 60%;

• blast furnace slag according to standard EN 197-1 paragraph 5.2.2 having a minimum glass content of 80%, ground to a minimum fineness $SSB_L$ of 2,500 cm$^2$/g, whose minimum amount in mass percentage corresponds to the value determined according to formula (III)

$$[1,000 \div SSB_L] \times [(-90 \times \ln(Dv97_k)) + 310]$$

Formula (III)

in which $Dv97_k$ is the Dv97 of the clinker expressed in $\mu$m,
$SSB_L$ is the Blaine specific surface of the slag expressed in cm$^2$/g

• complementary materials having a Dv90 less than or equal to 200 $\mu$m chosen among limestone powders or fly ashes;
• calcium sulfate;
• 0.05 to 1.5% by mass of a thinning agent; and

- up to 90% by volume of aggregates comprising sand and gravel, the mass ratio of the amount of sand to the amount of gravel being comprised between 1.5:1 and 1:1.8;

the percentages corresponding to proportions relative to the total dry volume.

2. The wet concrete composition according to claim 1, **characterized in that** the mass proportion of thinning agent in the premix varies from 0.1 to 0.8%.

3. The wet concrete composition according to claim 1, **characterized in that** the thinning agent is of the polycarboxylate type.

4. The wet concrete composition according to claim 1, **characterized in that** the mass ratio of the amount of sand to the amount of gravel being comprised between 1.25:1 and 1:1.4.

5. The wet concrete composition according to claim 1 comprising from 140 to 200 l/m$^3$, preferably from 150 to 180 l/m$^3$ of effective water.

6. A hardened concrete object of the composition according to any one of the preceding claims.

7. A method for preparing a wet concrete composition comprising a step of mixing at least 10% by volume of the premix according to any one of claims 1 to 5 with up to 90% by volume of the aggregates as defined in claim 1 and from 140 to 220 l/m$^3$ of effective water.

Figure 1

Figure 2

Figure 3

Figure 4

**EP 2 562 149 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006032785 A

- WO 2006032786 A